# EUROPEAN PATENT APPLICATION

(11) **EP 4 730 380 A1**
(43) Date of publication of application: **22.04.2026**
(21) Application number: 24842804.7
(22) Date of filing: 08.05.2024
(51) Int. Cl.: H01G 4/30

(54) **MULTILAYER CERAMIC ELECTRONIC COMPONENT**

(30) Priority: 19.07.2023 JP 2023117663
(71) Applicant: Murata Manufacturing Co., Ltd., Nagaokakyo-shi, Kyoto 617-8555 (JP)
(72) Inventor: IWATA, Shun, Nagaokakyo-shi, Kyoto 617-8555 (JP); TANIGUCHI, Daichi, Nagaokakyo-shi, Kyoto 617-8555 (JP)
(74) Representative: Zimmermann, Tankred Klaus
(86) International application number: PCT/JP2024/017066
(87) International publication number: WO 2025/018007

(57) **Abstract**

Provided is a multilayer ceramic electronic component such as a multilayer ceramic capacitor having high reliability. In a multilayer ceramic electronic component (1), a laminate (2) has: an inner layer part (10) in which a plurality of first internal electrode layers (6a) and a plurality of second internal electrode layers (6b) face each other. The concentration of an additive contained in a first lateral surface (S1) side of the inner layer part (10) is higher than that in the center part of the inner layer part (10) in the width direction (W), the concentration of the additive contained in a second lateral surface (S2) side of the inner layer part (10) is higher than that in the center part of the inner layer part (10) in the width direction (W), the concentration of the additive in the end of the second internal electrode layer (6b) on a first end surface (E1) side of the inner layer part (10) is higher than that in the center part of the inner layer part (10), and the concentration of the additive in the end of the first internal electrode layer (6a) on a second end surface (E2) side of the inner layer part (10) is higher than that in the center part of the inner layer part (10). The additive contains at least one from among Sn, Mn, and Mg.

## Description

### TECHNICAL FIELD

The present invention relates to a multilayer ceramic electronic component.

### BACKGROUND ART

Multilayer ceramic electronic components such as multilayer ceramic capacitors are manufactured by stacking a plurality of dielectric sheets. Internal electrode layers for configuring capacitors, resistors, inductors, varistors, filters, and the like are formed on the dielectric sheets depending on the type of multilayer ceramic electronic component. In order to achieve reduced size and enhanced performance, such multilayer ceramic electronic components have been developed with thinner dielectric sheets and an increased number of layers. For example, refer to Patent Document 1.

### Citation List

### Patent Document

Patent Document 1: Japanese Unexamined Patent Application, Publication No. 2001-267173

### DISCLOSURE OF THE INVENTION

### Problems to be Solved by the Invention

However, in Patent Document 1, even when the dielectric sheets are made thinner and increased in number, the internal electrode layers may not be made thinner in some cases. When the thinned dielectric sheets and the internal electrode layers are stacked alternately, and the internal electrode layers are stacked such that the edges are alternately exposed at both end surfaces in the length direction of the dielectric sheets and are alternately extended towards a pair of external electrodes having different polarities, the multilayer body is formed in a state where a level difference occurs due to the thickness of the dielectric sheets and the thickness of the internal electrode layers.

In the step of pressing the multilayer body in a state where a level difference occurs due to the thicknesses, the ceramic of the dielectric sheets may flow to fill the level difference due to the thicknesses, such that the dielectric sheets near the level difference may become thin, and the thinned sheets may become even thinner.

However, when the dielectric sheets near the level difference become thin, the grain boundaries of the dielectric sheets are present only in a very small number in the thickness direction, a result of which the electrical resistance is very low. As a result, when voltage is applied to the thinned dielectric sheets, excessive current flows, which causes electric field concentration and may cause dielectric breakdown.

Furthermore, when current flows through the internal electrode layers, due to the edge effect, the electric field strength becomes larger at the end portions of the internal electrode layers near the level difference compared to other regions of the internal electrode layers. Therefore, more electric field concentration occurs at the end portions of the internal electrode layers near the level difference, and dielectric breakdown may occur.

Therefore, it is an object of the present invention to provide multilayer ceramic electronic components such as multilayer ceramic capacitors, each having high reliability. In particular, it is an object to provide multilayer ceramic electronic components that are each able to reduce or prevent the occurrence of dielectric breakdown at the end portions of internal electrode layers exposed to strong electric fields. Means for Solving the Problems

An embodiment of the present invention provides a multilayer ceramic electronic component which includes: a multilayer body including a plurality of dielectric layers that are laminated, a plurality of first internal electrode layers and a plurality of second internal electrode layers laminated on the plurality of dielectric layers, a first main surface and a second main surface opposed to each other in a lamination direction, a first end surface and a second end surface opposed to each other in a length direction orthogonal to the lamination direction, and a first lateral surface and a second lateral surface opposed to each other in a width direction orthogonal to the lamination direction and the length direction, a first external electrode provided on the first end surface; and a second external electrode provided on the second end surface. The plurality of first internal electrode layers are electrically connected to the first external electrode. The plurality of second internal electrode layers are electrically connected to the second external electrode. The multilayer body includes an inner layer portion where the plurality of first internal electrode layers and the plurality of second internal electrode layers are opposed to each other. A concentration of an additive contained adjacent to the first lateral surface of the inner layer portion is higher than a concentration of the additive in a middle portion of the inner layer portion in the width direction. A concentration of the additive contained adjacent to the second lateral surface of the inner layer portion is higher than a concentration of the additive in the middle portion of the inner layer portion in the width direction. A concentration of the additive at an end portion of each of the plurality of second internal electrode layers adjacent to the first end surface of the inner layer portion is higher than a concentration of the additive in a middle portion of the inner layer portion. A concentration of the additive at an end portion of each of the plurality of first internal electrode layers adjacent to the second end surface of the inner layer portion is higher than a concentration of the additive in a middle portion of the inner layer portion. The additive contains at least one of Sn, Mn, or Mg.

### Effects of the Invention

According to the present invention, it is possible to provide multilayer ceramic electronic components such as multilayer ceramic capacitors, each having high reliability.

### BRIEF DESCRIPTION OF THE DRAWINGS

FIG. 1 is a perspective view of a multilayer ceramic electronic component according to an embodiment of the present invention.
FIG. 2 is a cross-sectional view taken along the line I-I in FIG. 1.
FIG. 3 is a cross-sectional view taken along the line II-II in FIG. 1.
FIG. 4 is a cross-sectional view taken along the line III-III in FIG. 1.
FIG. 5 is a view corresponding to the cross-sectional view taken along the line II-II in FIG. 1 in a second embodiment.
FIG. 6 is a view showing an outline of a multilayer body core portion.
FIG. 7 is a perspective view showing a polished inner layer portion.
FIG. 8 is a perspective view showing a polished inner layer portion.

### PREFERRED MODE FOR CARRYING OUT THE INVENTION

### (First Embodiment)

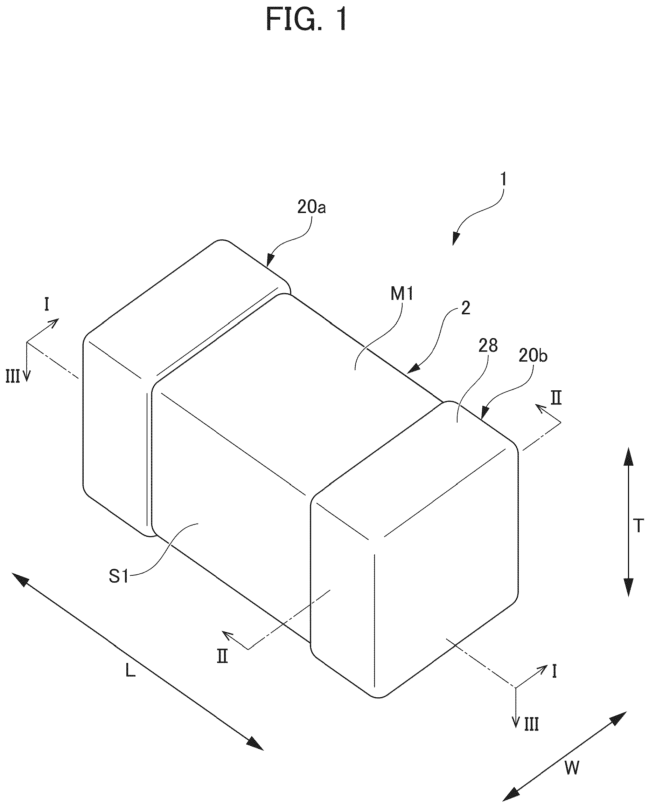

A mode for carrying out the invention will be described based on a multilayer ceramic capacitor 1 which is an example of a multilayer ceramic electronic component. FIG. 1 is a perspective view of the multilayer ceramic capacitor 1 according to the first embodiment of the present invention.

### (Multilayer Body)

The multilayer body 2 includes a plurality of laminated dielectric layers and a plurality of internal electrode layers. The multilayer body 2 has a substantially rectangular parallelepiped shape. In the multilayer body 2, a direction in which the dielectric layers and the internal electrode layers are laminated is defined as a lamination direction T. A direction orthogonal to the lamination direction T is defined as a width direction W. A direction orthogonal to the lamination direction T and the width direction W is defined as a length direction L.

In the multilayer body 2, two surfaces opposed to each other in the lamination direction T are defined as a first main surface M1 and a second main surface M2, respectively. In the multilayer body 2, two surfaces opposed to each other in the width direction W are defined as a first lateral surface S1 and a second lateral surface, respectively. Two surfaces opposed to each other in the length direction L are defined as a first end surface E1 and a second end surface E2. A mounting surface of the multilayer ceramic capacitor 1 is the second main surface M2. The mounting surface refers to a surface that faces a wiring substrate when the multilayer ceramic capacitor 1 is mounted on the wiring substrate or the like.

Regarding cross sections of the multilayer body 2, a cross section along the line I-I in FIG. 1 is defined as an LT cross section. A cross section along the line II-II in FIG. 1 is defined as a WT cross section. A cross section along the line III-III in FIG. 1 is defined as an LW cross section.

It is preferable that corner portions and ridge portions of the multilayer body 2 are rounded. Each of the corner portions refers to a portion where three surfaces of the multilayer body 2 intersect with each other. Each of the ridge portions refers to a portion where two surfaces of the multilayer body 2 intersect with each other. Irregularities or the like may be formed on a portion or all of the main surfaces, lateral surfaces, and end surfaces.

### (Dielectric Layer)

The total number of dielectric layers laminated in the multilayer body 2 is preferably fifteen or more and 2000 or less. The dielectric layer is mainly made of a ceramic material. As the ceramic material, for example, dielectric ceramics having main components such as BaTiO₃, CaTiO₃, SrTiO₃, CaZrO₃, and the like can be used. Also, dielectric ceramics in which secondary components such as Mn compounds, Fe compounds, Cr compounds, Co compounds, Ni compounds, and the like are added to these main components may be used as the ceramic material.

In the present embodiment, a multilayer ceramic electronic component will be described using the multilayer ceramic capacitor 1, which is one form of multilayer ceramic electronic component, as an example.

When piezoelectric ceramics are used for the multilayer body 2, such a multilayer ceramic electronic component functions as a ceramic piezoelectric element. Specific examples of piezoelectric ceramic materials include PZT (lead zirconate titanate) ceramic materials and the like.

When semiconducting ceramics are used for the multilayer body 2, such a multilayer ceramic electronic component functions as a thermistor element. Specific examples of semiconducting ceramic materials include spinel ceramic materials and the like.

When magnetic ceramics are used for the multilayer body 2, such a multilayer ceramic electronic component functions as an inductor element. When the multilayer ceramic electronic component functions as an inductor element, the internal electrode layers function as coil-shaped conductors. Specific examples of magnetic ceramic materials include ferrite ceramic materials and the like.

The thickness of each dielectric layer is preferably 0.5 µm or more and 10 µm or less.

### (Division of Multilayer Body)

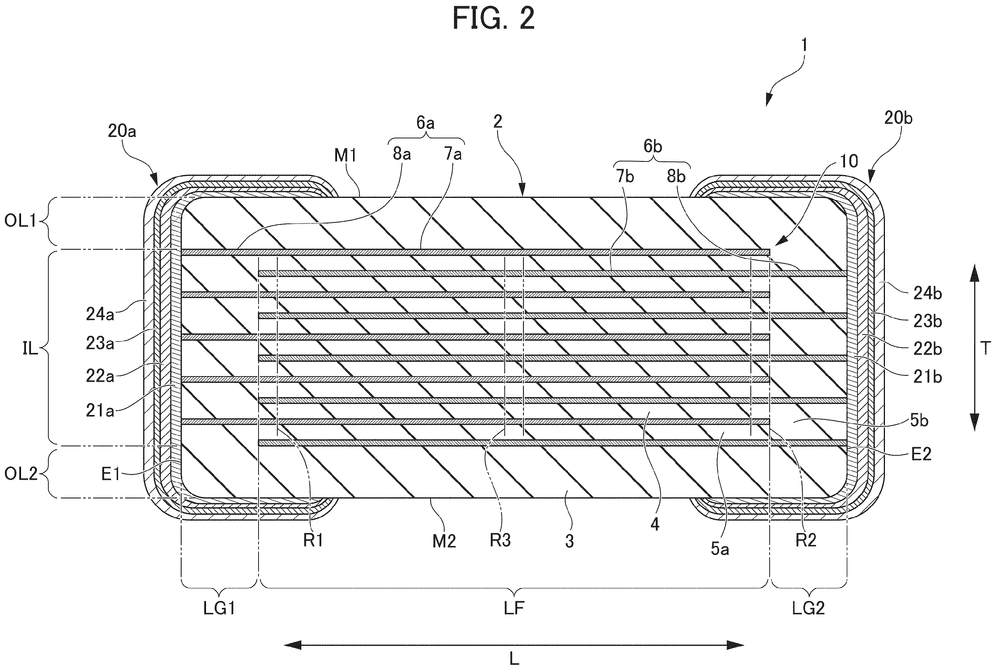

Based on FIG. 2, the division of the multilayer body 2 in the length direction L will be described. FIG. 2 is a cross-sectional view taken along the line I-I in FIG. 1. The multilayer body 2 can be divided in the lamination direction T into a first main surface-side outer layer portion OL1, an inner layer range IL, and a second main surface-side outer layer portion OL2. The first main surface-side outer layer portion OL1, the inner layer range IL, and the second main surface-side outer layer portion OL2 are provided adjacent to each other in this order from the first main surface M1 toward the second main surface M2 in the lamination direction T.

The first main surface-side outer layer portion OL1 is a portion between a line drawn from the first end surface E1 to the second end surface E2 along the surface of the internal electrode layer closest to the first main surface M1, and the first main surface M1. The second main surface-side outer layer portion OL2 is a portion between a line drawn from the first end surface E1 to the second end surface E2 along the surface of the internal electrode layer closest to the second main surface M2, and the second main surface M2. The inner layer range IL is a range sandwiched between the first main surface-side outer layer portion OL1 and the second main surface-side outer layer portion OL2. That is, the inner layer range IL is a range between a line drawn from the first end surface E1 to the second end surface E2 along the surface of the internal electrode layer closest to the first main surface M1 and a line drawn from the second end surface E2 toward the first end surface E1 along the surface of the internal electrode layer closest to the second main surface M2.

The first main surface-side outer layer portion OL1 is located adjacent to the first main surface M1 of the multilayer body 2. The first main surface-side outer layer portion OL1 can be an aggregate of a plurality of dielectric layers located between a line drawn from the first end surface E1 to the second end surface E2 along the outermost surface of the internal electrode layer closest to the first main surface M1, and the first main surface M1.

The second main surface-side outer layer portion OL2 is located adjacent to the second main surface M2 of the multilayer body 2. The second main surface-side outer layer portion OL2 can be an aggregate of a plurality of dielectric layers located between a line drawn from the first end surface E1 to the second end surface E2 along the outermost surface of the internal electrode layer closest to the second main surface M2, and the second main surface M2.

The first main surface-side outer layer portion OL1 is located adjacent to the first main surface M1 and includes a plurality of dielectric layers located between the first main surface M1, and the outermost surface of the inner layer range IL adjacent to the first main surface M1 and an extension line from the outermost surface.

The second main surface-side outer layer portion OL2 is located adjacent to the second main surface M2 and includes a plurality of dielectric layers located between the second main surface M2, and the outermost surface of the inner layer range IL adjacent to the second main surface M2 and an extension line from the outermost surface.

The inner layer range IL is a range sandwiched between the first main surface-side outer layer portion OL1 and the second main surface-side outer layer portion OL2.

Among the dielectric layers, dielectric layers located in the first main surface-side outer layer portion OL1 and the second main surface-side outer layer portion OL2 are defined as outer dielectric layers 3. Among the dielectric layers, dielectric layers located in the inner layer range IL are defined as inner dielectric layers 4.

The dimensions of the multilayer body 2 are not particularly limited. The dimension of the multilayer body 2 in the length direction L is defined as an L dimension. The L dimension is preferably 0.2 mm or more and 10 mm or less. The dimension of the multilayer body 2 in the width direction W is defined as a W dimension. The W dimension is preferably 0.1 mm or more and 5 mm or less. The dimension of the multilayer body 2 in the lamination direction T is defined as a T dimension. The T dimension is preferably 0.1 mm or more and 5 mm or less.

### (L gap)

The division of the multilayer body 2 in the length direction L will be explained. The multilayer body 2 can be divided in the length direction L into a first end surface-side outer layer portion LG1, an L counter portion LF, and a second end surface-side outer layer portion LG2. The first end surface-side outer layer portion LG1, the L counter portion LF, and the second end surface-side outer layer portion LG2 are provided adjacent to each other in this order from the first end surface E1 toward the second end surface E2 in the length direction L.

The first end surface-side outer layer portion LG1 is a portion where only the first internal electrode layers 6a are opposed to each other in the lamination direction T, and is a portion between the first main surface-side outer layer portion OL1 and the second main surface-side outer layer portion OL2. The second end surface-side outer layer portion LG2 is a portion where only the second internal electrode layers 6b are opposed to each other in the lamination direction T, and is a portion between the first main surface-side outer layer portion OL1 and the second main surface-side outer layer portion OL2. The L counter portion LF is a region provided between the first end surface-side outer layer portion LG1 and the second end surface-side outer layer portion LG2. That is, the L counter portion LF is a portion where the first internal electrode layers 6a and the second internal electrode layers 6b are opposed to each other in the lamination direction T. The L counter portion LF is a portion corresponding to the counter electrode portions of the internal electrode layers. The first end surface-side outer layer portion LG1 and the second end surface-side outer layer portion LG2 are portions corresponding to the extension electrode portions of the internal electrode layers. The counter electrode portion and the extension electrode portion will be described later. The first end surface-side outer layer portion LG1 and the second end surface-side outer layer portion LG2 are also referred to as L gaps.

The first end surface-side outer layer portion LG1 is located adjacent to the first end surface E1, and is located between the outermost surface adjacent to the first end surface E1 and the end portion outermost surfaces of the second internal electrode layers 6b that are not connected to the first external electrode 20a.

The second end surface-side outer layer portion LG2 is located adjacent to the second end surface E2, and is located between the outermost surface adjacent to the second end surface E2 and the end portion outermost surfaces of the first internal electrode layers 6a that are not connected to the second external electrode 20b.

### (W Gap)

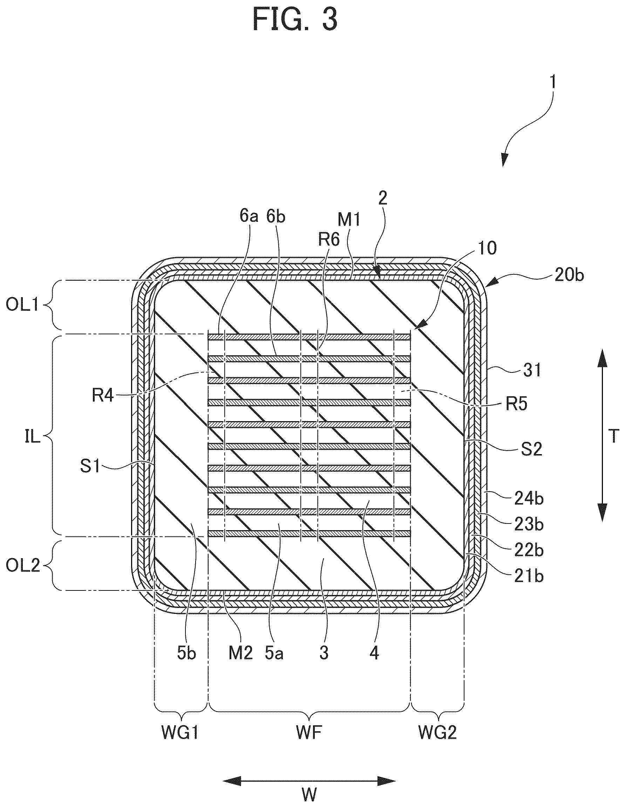

The division of the multilayer body 2 in the width direction W will be described with reference to FIG. 3. FIG. 3 is a cross-sectional view taken along the line II-II in FIG. 1. The multilayer body 2 can be divided in the lamination direction T into the first main surface-side outer layer portion OL1, the inner layer range IL, and the second main surface-side outer layer portion OL2. The first main surface-side outer layer portion OL1 refers to a portion between a line drawn from the first lateral surface S1 to the second lateral surface S2 along the outermost surface of the internal electrode layer closest to the first main surface M1, and the first main surface M1. The second main surface-side outer layer portion OL2 refers to a portion between a line drawn from the first lateral surface S1 to the second lateral surface S2 along the outermost surface of the internal electrode layer closest to the second main surface M2, and the second main surface M2. The range of the inner layer range IL is a range sandwiched between the first main surface-side outer layer portion OL1 and the second main surface-side outer layer portion OL2. That is, the inner layer range IL refers to a range between a line drawn from the first lateral surface S1 to the second lateral surface S2 along the outermost surface of the internal electrode layer closest to the first main surface M1 and a line drawn from the second lateral surface S2 toward the first lateral surface S1 along the outermost surface of the internal electrode layer closest to the second main surface M2. Among the dielectric layers, dielectric layers provided in the first main surface-side outer layer portion OL1 and the second main surface-side outer layer portion OL2 are defined as outer layer dielectric layers 3. Among the dielectric layers, the dielectric layers provided in the inner layer range IL2 are defined as inner dielectric layers 4.

The multilayer body 2 can be divided in the width direction W into a first lateral surface-side outer layer portion WG1, a W counter portion WF, and a second lateral surface-side outer layer portion WG2. The first lateral surface-side outer layer portion WG1, the W counter portion WF, and the second lateral surface-side outer layer portion WG2 are provided adjacent to each other in this order from the first lateral surface S1 toward the second lateral surface S2 in the width direction W.

The W counter portion WF refers to a portion where the internal electrode layers are opposed to each other in the lamination direction T. The first lateral surface-side outer layer portion WG1 refers to a portion between the W counter portion WF, the first lateral surface S1, the first main surface-side outer layer portion OL1, and the second main surface-side outer layer portion OL2. The second lateral surface-side outer layer portion WG2 refers to a portion between the W counter portion WF, the second lateral surface S2, the first main surface-side outer layer portion OL1, and the second main surface-side outer layer portion OL2. The first lateral surface-side outer layer portion WG1 and the second lateral surface-side outer layer portion WG2 are also referred to as W gaps.

The first lateral surface-side outer layer portion WG1 and the second lateral surface-side outer layer portion WG2 are portions where no internal electrode layers exist in the lamination direction T. The first lateral surface-side outer layer portion WG1 is located adjacent to the first lateral surface S1, is a portion where no internal electrodes exist in the lamination direction T, and is a portion sandwiched between the first main surface-side outer layer portion OL1 and the second main surface-side outer layer portion OL2. That is, the first lateral surface-side outer layer portion WG1 is located adjacent to the first lateral surface S1 and can include a plurality of dielectric layers located between the first lateral surface S1, the first main surface-side outer layer portion OL1, the second main surface-side outer layer portion OL2, and the outermost surface of the inner layer portion adjacent to the first lateral surface S1.

Likewise, the second lateral surface-side outer layer portion WG2 is located adjacent to the second lateral surface S2, is a portion where no internal electrodes exist in the lamination direction T, and is a portion sandwiched between the first main surface-side outer layer portion OL1 and the second main surface-side outer layer portion OL2. That is, the second lateral surface-side outer layer portion WG2 is located adjacent to the second lateral surface S2, and can include a plurality of dielectric layers located between the second lateral surface S2, the first main surface-side outer layer portion OL1, the second main surface-side outer layer portion OL2, and the outermost surface of the inner layer portion adjacent to the second lateral surface S2.

### (Internal Electrode Layer)

The internal electrode layers include a plurality of first internal electrode layers 6a and a plurality of second internal electrode layers 6b. Each of the first internal electrode layers 6a is an internal electrode layer exposed at the first end surface E1. Each of the second internal electrode layers 6b is an internal electrode layer exposed at the second end surface E2.

Each of the first internal electrode layers 6a includes a first counter electrode portion 7a opposed to the second internal electrode layer 6b, and a first extension electrode portion 8a extending from the first counter electrode portion 7a toward the first end surface E1 of the multilayer body 2. Each of the first extension electrode portions 8a includes an end portion adjacent to the first end surface E1 that extends toward the surface of the first end surface E1 of the multilayer body 2. The end portion of the first extension electrode portion 8a extending toward the first end surface E1 provides an exposed portion at the first end surface E1.

The second internal electrode layers 6b include a second counter electrode portion 7b opposed to the first internal electrode layer 6a, and a second extension electrode portion 8b extending from the second counter electrode portion 7b toward the second end surface E2 of the multilayer body 2. Each of the second extension electrode portions 8b includes an end portion adjacent to the second end surface E2 that extends toward the surface of the second end surface E2 of the multilayer body 2. The end portion of the second extension electrode portion 8b extending toward the second end surface E2 provides an exposed portion at the second end surface E2.

The shapes of the first counter electrode portion 7a and the second counter electrode portion 7b are preferably rectangular, but the shapes of the first counter electrode portion 7a and the second counter electrode portion 7b are not particularly limited. However, the corner portions of the first counter electrode portion 7a and the second counter electrode portion 7b may be rounded. In addition, the corner portions of the first counter electrode portion 7a and the second counter electrode portion 7b may be formed obliquely. Forming obliquely indicates forming in a tapered shape.

In the first embodiment, the shapes of the first extension electrode portion 8a and the second extension electrode portion 8b are preferably rectangular, but are not particularly limited to the shapes of this embodiment. The shapes of the first extension electrode portion 8a and the second extension electrode portion 8b are preferably rectangular, but the corner portions of the first extension electrode portion 8a and the second extension electrode portion 8b may be rounded. In addition, the corner portions of the first extension electrode portion 8a and the second extension electrode portion 8b may be formed obliquely. Forming obliquely indicates forming in a tapered shape.

The width of the first counter electrode portion 7a and the width of the first extension electrode portion 8a may be formed with the same width. Alternatively, one of the width of the first counter electrode portion 7a or the width of the first extension electrode portion 8a may be formed narrower than the other.

Similarly, the width of the second counter electrode portion 7b and the width of the second extension electrode portion 8b may be formed with the same width. Alternatively, one of the width of the second counter electrode portion 7b or the width of the second extension electrode portion 8b may be formed narrower than the other.

The first internal electrode layers 6a and the second internal electrode layers 6b can be made of appropriate electrically conductive materials such as metals including Ni, Cu, Ag, Pd, Au, or alloys containing at least one of these metals such as Ag-Pd alloy.

In the multilayer ceramic capacitor 1 of the present embodiment, capacitance is generated by the first counter electrode portion 7a and the second counter electrode portion 7b opposing each other with a corresponding one of the inner dielectric layers 4 interposed therebetween. This enables the multilayer ceramic capacitor 1 to develop capacitor characteristics.

The thickness of each of the first internal electrode layers 6a and the second internal electrode layers 6b is preferably, for example, about 0.2 µm or more and 2.0 µm or less. In addition, the total number of the first internal electrode layers 6a and the second internal electrode layers 6b is preferably 15 or more and 2000 or less.

### (Reduction of Level Difference Near End Surface)

The multilayer ceramic capacitor 1 of the present embodiment is provided with a second dielectric layer 5b. The second dielectric layer 5b is provided in order to make the length of the multilayer body 2 in the lamination direction T uniform.

The level difference layer will be described with reference to FIG. 2. Regarding the length of the multilayer body 2 in the lamination direction T, it is preferred that the difference in length between the L counter portion LF and the first end surface-side outer layer portion LG1 and the second end surface-side outer layer portion LG2 is small. However, in the inner layer range IL, the inner dielectric layer 4 is provided between the first internal electrode layer 6a and the second internal electrode layer 6b in the L counter portion LF, but in the first end surface-side outer layer portion LG1 and the second end surface-side outer layer portion LG2, there are locations where the first internal electrode layer 6a or the second internal electrode layer 6b, and the inner dielectric layer 4 are not provided, such that the multilayer body after the post-lamination pressing step is likely to have different lengths in the lamination direction T between the L counter portion LF, and the first end surface-side outer layer portion LG1 and the second end surface-side outer layer portion LG2.

In the inner layer range IL, the inner dielectric layers 4, the first internal electrode layers 6a, and the second internal electrode layers 6b are laminated in the L counter portion LF.

In contrast, only the inner dielectric layers 4 and the first internal electrode layers 6a are laminated in the first end surface-side outer layer portion LG1. The second internal electrode layers 6b are not laminated in the first end surface-side outer layer portion LG1.

Furthermore, only the inner dielectric layers 4 and the second internal electrode layers 6b are laminated in the second end surface-side outer layer portion LG2. The first internal electrode layers 6a are not laminated in the second end surface-side outer layer portion LG2.

Therefore, the multilayer body after the post-lamination pressing step is likely to have different lengths in the lamination direction T between the L counter portion LF, and the first end surface-side outer layer portion LG1 and the second end surface-side outer layer portion LG2.

Therefore, in order to reduce the difference in lengths in the lamination direction T between the L counter portion LF, and the first end surface-side outer layer portion LG1 and the second end surface-side outer layer portion LG2, additional inner dielectric layers 4 are provided in the first end surface-side outer layer portion LG1 and the second end surface-side outer layer portion LG2. This additional inner dielectric layer 4 is defined as the second dielectric layer 5b. In contrast, the dielectric layers included in the multilayer body 2 other than the second dielectric layer 5b are defined as the first dielectric layer 5a.

The second dielectric layer 5b is provided between the end portion of the L counter portion LF adjacent to the first end surface E1 and the end portion of the first end surface-side outer layer portion LG1 adjacent to the first end surface E1. Furthermore, the second dielectric layer 5b is provided between the end portion of the L counter portion LF adjacent to the second end surface E2 and the end portion of the second end surface-side outer layer portion LG2 adjacent to the second end surface E2.

The second dielectric layer 5b preferably includes the same main components as the first dielectric layer 5a. However, the components of the second dielectric layer 5b are not limited thereto.

### (Reduction of Level Difference Near Lateral Surfaces)

In the multilayer ceramic capacitor 1 of the present embodiment, the second dielectric layers 5b are also provided on the lateral surfaces. This will be described based on FIG. 3. The length of the multilayer body 2 in the lamination direction T is preferably uniform not only in the length direction L, but also in the width direction W. However, in the inner layer range IL, in the width direction W, similarly to the length direction L, the length in the lamination direction T is likely to differ between the W counter portion WF, and the first lateral surface-side outer layer portion WG1 and the second lateral surface-side outer layer portion WG2.

In the inner layer range IL, the inner dielectric layers 4, the first internal electrode layers 6a, and the second internal electrode layers 6b are laminated in the W counter portion WF.

In contrast, the first internal electrode layers 6a and the second internal electrode layers 6b are not laminated in the first lateral surface-side outer layer portion WG1 and the second lateral surface-side outer layer portion WG2. Only the inner dielectric layers 4 are laminated in the first lateral surface-side outer layer portion WG1 and the second lateral surface-side outer layer portion WG2.

Therefore, the length in the lamination direction T is likely to differ between the W counter portion WF, and the first lateral surface-side outer layer portion WG1 and the second lateral surface-side outer layer portion WG2.

Therefore, in order to reduce the difference in length in the lamination direction T between the W counter portion WF, and the first lateral surface-side outer layer portion WG1 and the second lateral surface-side outer layer portion WG2, additional inner dielectric layers 4 are provided in the first lateral surface-side outer layer portion WG1 and the second lateral surface-side outer layer portion WG2. This additional inner dielectric layer 4 is defined as the second dielectric layer 5b.

The second dielectric layers 5b are provided between the end portion adjacent to the first lateral surface S1 of the first lateral surface-side outer layer portion WG1 and the end portion adjacent to the first lateral surface S1 of the W counter portion WF. Furthermore, the second dielectric layers 5b are provided between the end portion adjacent to the second lateral surface S2 of the second lateral surface-side outer layer portion WG2 and the end portion adjacent to the second lateral surface S2 of the W counter portion WF.

The multilayer ceramic capacitor 1 of the present embodiment is characterized by the concentration of additives in the multilayer body 2.

### (Inner Layer Portion)

The portion where the first internal electrode layer 6a and the second internal electrode layer 6b are opposed to each other is defined as the inner layer portion 10. The inner layer portion 10 is the portion where the L counter portion LF shown in FIG. 2 and the W counter portion WF shown in FIG. 3 intersect with the inner layer range IL. The inner layer portion 10 has an approximately rectangular parallelepiped shape. In FIG. 2, the portion where the L counter portion LF and the inner layer range IL intersect is shown as the inner layer portion 10. Also, in FIG. 3, the portion where the W counter portion WF and the inner layer range IL intersect is shown as the inner layer portion 10.

### (Additive Concentration)

In the LT cross section shown in FIG. 2, the end portion of the inner layer portion 10 adjacent to the first end surface E1 is defined as a region R1. The end portion of the inner layer portion 10 adjacent to the second end surface E2 is defined as a region R2. The middle portion of the inner layer portion 10 in the length direction L is defined as a region R3.

The additive concentration of region R1 and the additive concentration of region R2 are respectively higher than the additive concentration of region R3.

The same applies to the WT cross section. In the WT cross section shown in FIG. 3, the end portion of the inner layer portion 10 adjacent to the first lateral surface S1 is defined as a region R4. The end portion of the inner layer portion 10 adjacent to the second lateral surface S2 is defined as a region R5. The middle portion of the inner layer portion 10 in the width direction W is defined as a region R6.

The additive concentration of region R4 and the additive concentration of region R5 are respectively higher than the additive concentration of region R6.

### (Types of Additives)

The additive is Sn. The concentration of the additive described above indicates the concentration of Sn. The type of additive is not limited to Sn. Examples of additives other than Sn include Mn and Mg.

When the concentration of the additive is higher at the end surface side and lateral surface side of the inner layer portion 10 than at the middle portion of the inner layer portion 10, it is possible to improve the reliability of the multilayer ceramic capacitor 1. Specifically, when the concentration of Sn as the additive is high at the end surface side and the lateral surface side of the inner layer portion 10, the withstand voltage is improved by this Sn. When the concentration of Sn is increased, Sn is likely to segregate to the end surface of the internal electrode layer. When Sn segregates at the end surface, a depletion layer (an area where electrons do not exist) generated between the dielectric layer and the internal electrode becomes larger (increases). When the depletion layer becomes larger, the energy required for electrons to pass through the depletion layer increases. That is, since electrons become less likely to migrate within the depletion layer, it is possible to reduce or prevent electric field concentration. Since it is possible to reduce or prevent electric field concentration, it is possible to reduce or prevent insulation deterioration and dielectric breakdown at the end surface side and the lateral surface side of the inner layer portion 10 where an electric field is likely to concentrate. Accordingly, it is possible to reduce or prevent insulation deterioration and dielectric breakdown at the end surface side and the lateral surface side of the inner layer portion 10 where an electric field is likely to concentrate.

The concentrations of the additive contained in region R1, region R2, region R4, and region R5 of the inner layer portion 10 are respectively in a ratio of 100.1 mol% or more and 103.0 mol% or less with respect to the concentration of the additive contained in region R3 and region R6 of the inner layer portion 10. When the concentration ratio is less than 100.1 mol%, it is not sufficient to reduce or prevent migration of electrons within the dielectric layer, and the occurrence of dielectric breakdown cannot be reduced or prevented, so reliability does not improve. When the concentration ratio exceeds 103.0%, acceptors become excessive within the dielectric layer, and oxygen vacancies are generated excessively, which accelerates deterioration of electric field strength and causes dielectric breakdown, so reliability does not improve.

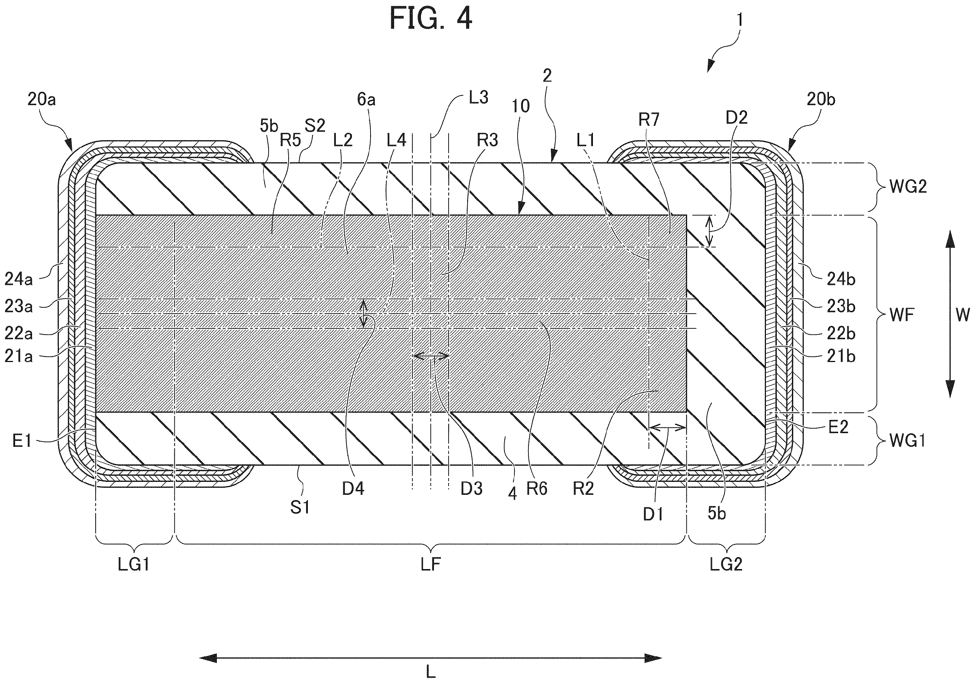

FIG. 4 is a view showing a cross section taken along the line III-III in FIG. 1. FIG. 4 shows an LW cross section of the multilayer ceramic capacitor 1. The distribution of additive concentration in the LW cross section of the multilayer ceramic capacitor 1 will be described.

### (Region R2)

Line L1 shown in FIG. 4 is a line indicating a position 60 µm away from the end portion of the inner layer portion 10 adjacent to the second end surface E2 toward the first end surface E1. That is, distance D1 shown in FIG. 4 is 60 µm. In the inner layer portion 10, the region between the end portion of the inner layer portion 10 adjacent to the second end surface E2 and line L1 is region R2. The end portion of the inner layer portion 10 adjacent to the second end surface E2 corresponds to the interface between the inner layer portion 10 and the second dielectric layer 5b.

### (Region R5)

Line L2 shown in FIG. 4 is a line indicating a position 60 µm away from the end portion of the inner layer portion 10 adjacent to the second lateral surface S2 toward the first lateral surface S1. That is, distance D2 shown in FIG. 4 is 60 µm. In the inner layer portion 10, the region between the end portion of the inner layer portion 10 adjacent to the second lateral surface S2 and line L2 is region R5. The end portion of the inner layer portion 10 adjacent to the second lateral surface S2 corresponds to the interface between the inner layer portion 10 and the second dielectric layer 5b.

### (Region R2 and Region R5)

The regions R2 and R5 have been described above regarding the regions at the end portions of the inner layer portion 10. The same applies to region R1 and region R4. Region R1 is a region from the end portion of the inner layer portion 10 adjacent to the first end surface E1 to a line indicating a position 60 µm in the direction of the second end surface E2. Region R4 is a region from the end portion of the inner layer portion 10 adjacent to the first lateral surface S1 to a line indicating a position 60 µm in the direction of the second lateral surface S2.

Line L3 shown in FIG. 4 is a center line of the inner layer portion 10 in the length direction L. Line L4 is a center line of the inner layer portion 10 in the width direction W.

### (Region R3)

In the inner layer portion 10, a range having a length of 60 µm in the length direction L centered on the line L3 is the region R3. The distance D3 shown in FIG. 4 is 60 µm.

### (Region R6)

In addition, in the inner layer portion 10, a region having a length of 60 µm in the width direction W centered on the line L4 is the region R6. The distance D4 shown in FIG. 4 is 60 µm.

As described above, in the length direction L, the concentration of the additive in the region R2 is higher than the concentration of the additive in the region R3.

In addition, in the width direction W, the concentration of the additive in the region R5 is higher than the concentration of the additive in the region R6.

Here, a region where the region R2 and the region R5 overlap is defined as a region R7. The concentration of the additive in the region R7 is higher than the concentration of the additive in the region R2 and the concentration of the additive in the region R5. Since the region R7 has the highest concentration of the additive, it is possible to further reduce or prevent the migration of electrons. Therefore, it is possible to reduce or prevent insulation deterioration and dielectric breakdown at the intersection of the end surface-side end portion and the lateral surface-side end portion of the inner layer portion 10 where electric field tends to concentrate.

The above description has been given using one of the end portions of the inner layer portion 10 as an example. The same applies to other end portions of the inner layer portion 10.

### (External Electrodes)

Next, the external electrodes will be described. The external electrodes include the first external electrode 20a and the second external electrode 20b. The first external electrode 20a is connected to the first internal electrode layers 6a. The first external electrode 20a is provided on the first end surface E1, a portion of the first main surface M1, a portion of the second main surface M2, a portion of the first lateral surface S1, and a portion of the second lateral surface S2.

The second external electrode 20b is connected to the second internal electrode layers 6b. The second external electrode 20b is provided on the second end surface E2, a portion of the first main surface M1, a portion of the second main surface M2, a portion of the first lateral surface S1, and a portion of the second lateral surface S2.

The first external electrode 20a and the second external electrode 20b each preferably include a base electrode layer and a plated layer. The base electrode layer can include at least one selected from a fired layer, an electrically conductive resin layer, a thin film layer, and the like. The electrically conductive resin layer can also be provided separately from the base electrode layer. In the following description, a configuration including a fired layer functioning as the base electrode layer, and further including an electrically conductive resin layer separately from the base electrode layer will be described as an example.

The first external electrode 20a includes a first base electrode layer 21a, a first electrically conductive resin layer 22a, a first lower plated layer 23a, and a first upper plated layer 24a. The second external electrode 20b includes a second base electrode layer 21b, a second electrically conductive resin layer 22b, a second lower plated layer 23b, and a second upper plated layer 24b.

The first base electrode layer 21a and the second base electrode layer 21b are layers containing electrically conductive metal and glass components. The first electrically conductive resin layer 22a and the second electrically conductive resin layer 22b are layers made of thermosetting resin and do not contain metal components. The first lower plated layer 23a and the second lower plated layer 23b can be, for example, Ni plated layers. The first upper plated layer 24a and the second upper plated layer 24b can be, for example, Sn plated layers. Each layer will be described in order below.

### (Base Electrode Layer)

The base electrode layer includes a first base electrode layer 21a and a second base electrode layer 21b. The first base electrode layer 21a is provided from the first end surface E1 to a portion of the first main surface M1, a portion of the second main surface M2, a portion of the first lateral surface S1, and a portion of the second lateral surface S2. The second base electrode layer 21b is provided from the second end surface E2 to a portion of the first main surface M1, a portion of the second main surface M2, a portion of the first lateral surface S1, and a portion of the second lateral surface S2.

The first base electrode layer 21a and the second base electrode layer 21b include electrically conductive metal and a glass component. The electrically conductive metal includes at least one selected from Cu, Ni, Ag, Pd, Ag-Pd alloy, Au, and the like. The glass component includes at least one selected from B, Si, Ba, Mg, Al, Li, and the like.

Each of the first base electrode layer 21a and the second base electrode layer 21b may include a plurality of layers. The first base electrode layer 21a and the second base electrode layer 21b may be formed by applying and firing an electrically conductive paste including a glass component and metal to the multilayer body. The firing may be performed simultaneously with the firing of the internal electrode layers, or may be performed after firing the internal electrode layers. When the firing is performed simultaneously with the firing of the internal electrode layers and the dielectric layers, it is preferred to add a dielectric material instead of the glass component to form the base electrode layer by firing. In this manner, the first base electrode layer 21a and the second base electrode layer 21b are configured as fired layers.

The thickness of the first base electrode layer 21a at the middle portion in the lamination direction T of the first base electrode layer 21a located on the first end surface E1 is preferably, for example, about 10 µm or more and 150 µm or less. Similarly, the thickness of the second base electrode layer 21b at the middle portion in the lamination direction T of the second base electrode layer 21b located on the second end surface E2 is preferably, for example, about 10 µm or more and 150 µm or less.

When the first base electrode layer 21a and the second base electrode layer 21b are provided on the first main surface M1 and the second main surface M2, as well as the first lateral surface S1 and the second lateral surface S2, the thickness of the first base electrode layer 21a or the second base electrode layer 21b at the middle portion in the length direction L of the first base electrode layer 21a or the second base electrode layer 21b located on the first main surface M1 and the second main surface M2, and the first lateral surface S1 and the second lateral surface S2 is preferably, for example, about 5 µm or more and 50 µm or less.

When the base electrode layer is a thin film layer, the thin film layer can be formed by a thin film formation method such as sputtering or vapor deposition. The formed thin film layer is a layer of 1 µm or less in which metal particles are deposited.

### (Electrically Conductive Resin Layer)

An electrically conductive resin layer is provided on the base electrode layer. The electrically conductive resin layer includes a resin component and a metal component. The electrically conductive resin layer includes a first electrically conductive resin layer 22a and a second electrically conductive resin layer 22b. The first electrically conductive resin layer 22a and the second electrically conductive resin layer 22b include a thermosetting resin as a resin component. Therefore, the first electrically conductive resin layer 22a and the second electrically conductive resin layer 22b are more flexible than the base electrode layer. This is because the base electrode layer includes, for example, a plating film or a fired product of a metal component and a glass component.

Therefore, even when deflection stress is applied to the mounting substrate and physical shock is applied to the multilayer ceramic capacitor 1, or even when shock due to thermal cycling is applied to the multilayer ceramic capacitor 1, it is possible to reduce or prevent cracks from occurring in the multilayer ceramic capacitor 1. This is because the electrically conductive resin layer functions as a buffer layer.

Specific examples of the thermosetting resin included in the electrically conductive resin layer include various known thermosetting resins such as epoxy resin, phenol resin, urethane resin, silicone resin, and polyimide resin. Among these, epoxy resin is one of the most suitable resins. This is because epoxy resin has excellent heat resistance, moisture resistance, adhesion, and the like.

The first electrically conductive resin layer 22a is provided on the first base electrode layer 21a. The first electrically conductive resin layer 22a is provided so as to cover the first base electrode layer 21a. It is preferable that the end portion of the first electrically conductive resin layer 22a is in contact with the multilayer body 2. Similarly, the second electrically conductive resin layer 22b is provided on the second base electrode layer 21b. The second electrically conductive resin layer 22b is provided so as to cover the second base electrode layer 21b. It is preferable that the end portion of the second electrically conductive resin layer 22b is in contact with the multilayer body 2.

The metal component included in the first electrically conductive resin layer 22a and the second electrically conductive resin layer 22b can be Ag, Cu, Ni, Sn, Bi, or an alloy containing these metals. The metal component is preferably provided in the form of metal filler. When the metal component is metal powder, metal powder having a surface coated with Sn, Ni, or Cu can also be used. When using metal powder having a surface coated with Sn, Ni, or Cu, it is preferable to use Ag, Cu, Ni, Sn, Bi, or alloy powder thereof as the metal powder. The metal component preferably includes Ag in particular. Ag may be Ag alone, an alloy containing Ag, or metal powder having a surface coated with Ag.

When using metal powder having a surface coated with Ag, it is preferable to use Cu, Ni, Sn, Bi, or alloy powder thereof as the metal powder. When Ag is used as the metal filler, the following advantages are obtained. Ag has the lowest specific resistance among metals. Therefore, it is possible to provide an electrode with low electrical resistance. Since Ag is a noble metal, it is difficult to oxidize. Therefore, it is possible to increase the durability of the electrically conductive resin layer. As described above, by using Ag as the metal filler, it is possible to maintain the characteristics of Ag while making the base metal inexpensive.

The shape of the metal filler included in the first electrically conductive resin layer 22a and the second electrically conductive resin layer 22b is not particularly limited. The shape of the metal filler may be spherical, flat, or the like. The metal filler may be a mixture of spherical metal powder and flat metal powder.

The average particle size of the metal filler included in the first electrically conductive resin layer 22a and the second electrically conductive resin layer 22b is not particularly limited. The average particle size of the metal filler can be, for example, 0.3 µm or more and 10 µm or less. The average particle size of the metal filler included in the electrically conductive resin layer can be determined by calculation using a laser diffraction particle size measurement method (based on ISO 13320). This method for determining the average particle size can be applied regardless of the shape of the filler.

The metal filler included in the first electrically conductive resin layer 22a and the second electrically conductive resin layer 22b is mainly responsible for the electrical conductivity of the electrically conductive resin layer. Specifically, when the metal fillers contact each other, an electrical conduction path is formed inside the electrically conductive resin layer.

As the resin included in the first electrically conductive resin layer 22a and the second electrically conductive resin layer 22b, as described above, various known thermosetting resins such as epoxy resin, phenoxy resin, phenol resin, urethane resin, silicone resin, and polyimide resin can be used. Among these, epoxy resin, which has excellent heat resistance, moisture resistance, adhesion, and the like, is one of the most suitable resins.

The first electrically conductive resin layer 22a and the second electrically conductive resin layer 22b preferably include a curing agent together with the thermosetting resin. As the curing agent, when epoxy resin is used as the base resin, various known compounds such as phenol-based, amine-based, acid anhydride-based, imidazole-based, active ester-based, and amide imide-based compounds can be used.

The metal included in the first electrically conductive resin layer 22a is preferably included at 35 vmol% or more and 75 vmol% or less with respect to the total volume of the first electrically conductive resin layer 22a. Similarly, the metal included in the second electrically conductive resin layer 22b is preferably included at 35 vmol% or more and 75 vmol% or less with respect to the total volume of the second electrically conductive resin layer 22b.

The resin included in the first electrically conductive resin layer 22a is preferably included at 25 vmol% or more and 65 vmol% or less with respect to the total volume of the first electrically conductive resin layer 22a. The resin included in the second electrically conductive resin layer 22b is preferably included at 25 vmol% or more and 65 vmol% or less with respect to the total volume of the second electrically conductive resin layer 22b.

The thickness of the first electrically conductive resin layer 22a or the second electrically conductive resin layer 22b located on the first end surface E1 or the second end surface E2, at the middle portion in the lamination direction T, is preferably, for example, about 10 µm or more and 200 µm or less.

When the first electrically conductive resin layer 22a and the second electrically conductive resin layer 22b are also provided on the first main surface M1 and the second main surface M2, as well as the first lateral surface S1 and the second lateral surface S2, the thickness of the electrically conductive resin layer at the middle portion in the length direction L of the first electrically conductive resin layer 22a or the second electrically conductive resin layer 22b located on the first main surface M1 and the second main surface M2, and the first lateral surface S1 and the second lateral surface S2 is preferably, for example, about 10 µm or more and 200 µm or less.

### (Plated Layer)

The plated layer will be described. As described above, the plated layer includes a lower plated layer and an upper plated layer. That is, the plated layer includes two layers. However, the plated layer may include a single layer or a plurality of layers.

### (Lower Plated Layer)

The lower plated layer is provided on the electrically conductive resin layer. The lower plated layer covers at least a portion of the electrically conductive resin layer. The lower plated layer includes a first lower plated layer 23a and a second lower plated layer 23b. The first lower plated layer 23a is provided on the first electrically conductive resin layer 22a. The second lower plated layer 23b is provided on the second electrically conductive resin layer 22b.

The first lower plated layer 23a and the second lower plated layer 23b can be Ni plated layers. By making the lower plated layer an Ni plated layer, it is possible to reduce or prevent the base electrode layer and the like from being eroded by solder when mounting the multilayer ceramic capacitor 1.

### (Upper Plated Layer)

The upper plated layer is provided on the lower plated layer. The upper plated layer covers at least a portion of the lower plated layer. The upper plated layer includes a first upper plated layer 24a and a second upper plated layer 24b. The first upper plated layer 24a is provided on the first lower plated layer 23a. The second upper plated layer 24b is provided on the second lower plated layer 23b.

The first upper plated layer 24a and the second upper plated layer 24b can be Sn plated layers. The Sn plated layer has good solder wettability. Therefore, by using the Sn plated layer as the upper plated layer, it is possible to facilitate mounting when mounting the multilayer ceramic capacitor 1 on a substrate or the like.

The metals that function as materials for the lower plated layer and the upper plated layer are not limited to the above examples. The plated layer, including the lower plated layer and the upper plated layer, can include at least one selected from metals such as Cu, Ni, Ag, Pd, Au, and Sn, and alloys such as Ag-Pd alloy.

The thickness per layer of the plated layer is preferably 2 µm or more and 15 µm or less.

It is also possible to form the external electrode with only the plated layer without providing the base electrode layer. Hereinafter, a configuration in which only the plated layer is provided without providing the base electrode layer will be described.

Each of the first external electrode 20a and the second external electrode 20b is formed directly on the surface of the multilayer body 2 as a plated layer. That is, the multilayer ceramic capacitor 1 may include a configuration including a plated layer electrically connected to the first internal electrode layer 6a or the second internal electrode layer 6b. When the external electrode has such a configuration, the plated layer may be formed after providing a catalyst on the surface of the multilayer body 2 as pretreatment.

The plated layer preferably includes a lower plated electrode formed on the surface of the multilayer body 2 and an upper plated electrode formed on the surface of the lower plated electrode. In this case, each of the lower plated electrode and the upper plated electrode preferably includes at least one metal selected from Cu, Ni, Sn, Pb, Au, Ag, Pd, Bi, or Zn, or an alloy containing such a metal.

The lower plated electrode is preferably formed using Ni, which has solder barrier performance. The upper plated electrode is preferably formed using Sn or Au, which has good solder wettability.

For example, when the first internal electrode layer and the second internal electrode layer are formed using Ni, the lower plated electrode is preferably formed using Cu, which has good bonding property with Ni. The upper plated electrode may be formed as necessary, and each of the first external electrode 20a and the second external electrode 20b may include only the lower plated electrode.

The plated layer may include the upper plated electrode as the outermost layer, or may further form another plated electrode on the surface of the upper plated electrode. When providing the plated layer without providing the base electrode layer, the thickness per layer of the plated layer is preferably 1 µm or more and 15 µm or less. The plated layer preferably does not contain glass. The metal content per unit volume of the plated layer is preferably 99% by volume or more.

The dimensions of the multilayer ceramic capacitor 1 are not particularly limited. The dimension in the length direction L of the multilayer ceramic capacitor 1 including the multilayer body 2 and the external electrodes is defined as the L dimension. The L dimension is preferably 0.2 mm or more and 10 mm or less. The dimension in the lamination direction T of the multilayer ceramic capacitor 1 including the multilayer body 2 and the external electrodes is defined as the T dimension. The T dimension is preferably 0.1 mm or more and 0.5 mm or less. The dimension in the width direction of the multilayer ceramic capacitor 1 including the multilayer body 2 and the external electrodes is defined as the W dimension. The W dimension is preferably 0.1 mm or more and 10 mm or less.

### (Method of Manufacturing Multilayer Ceramic Capacitor of First Embodiment)

A method of manufacturing the multilayer ceramic capacitor 1 will be described.
(1) Prepare dielectric sheets and electrically conductive paste for manufacturing internal electrode layers. The dielectric sheets and the electrically conductive paste for manufacturing internal electrode layers include a binder and a solvent. Known organic binders and organic solvents can be used for these binders and solvents.
(2) Print the electrically conductive paste for manufacturing internal electrode layers in a predetermined pattern on the dielectric sheets to form internal electrode layer patterns. The printing can be performed by, for example, screen printing or gravure printing.
(3) Laminate a predetermined number of dielectric sheets for manufacturing the outer layer portion. No internal electrode layer pattern is printed on the dielectric sheets for manufacturing the outer layer portion. Dielectric sheets with printed internal electrode layer patterns are sequentially laminated on the laminated dielectric sheets. Furthermore, a predetermined number of dielectric sheets for manufacturing the outer layer portion are laminated thereon. A multilayer sheet is produced by these lamination processes.

The second dielectric layer 5b for reducing level differences will be described below. The dielectric paste functioning as the second dielectric layer 5b is referred to as level difference reduction paste.

The level difference reduction paste is applied to the peripheral region of the pattern for manufacturing internal electrode layers on the dielectric sheet on which the internal electrode layer pattern is formed by printing the electrically conductive paste for manufacturing internal electrode layers. That is, the level difference reduction paste is applied to portions where the pattern for manufacturing internal electrode layers is not formed. This is because the level difference reduction paste is used to eliminate level differences between the pattern for manufacturing internal electrode layers and the peripheral region thereof. The level difference reduction paste can also be applied so that a portion thereof overlaps with the peripheral region of the pattern for manufacturing internal electrode layers. The overlap width in this case can be, for example, about 50 µm. The level difference reduction paste can also be applied so that a gap is formed between the paste and the pattern for manufacturing internal electrode layers. The width of the gap in this case can be, for example, 50 µm.

The amount of overlap on the internal electrode layers when printing the level difference reduction paste, that is, the overlap amount, can be exemplified as -30 µm in the length direction L, +20 µm in the width direction W, and a thickness of about 50% of the thickness of the pattern for manufacturing internal electrode layers or the Ni thickness. The amount of overlap on the second dielectric layer 5b when the level difference reduction paste is first printed on the dielectric sheet, and then the internal electrode layer paste is printed, that is, the overlap amount, can be exemplified as -30 µm in the length direction L, +20 µm in the width direction W, and a thickness of about 50% of the thickness of the pattern for manufacturing internal electrode layers or the Ni thickness.

For the level difference reduction paste, the ceramic paste used when manufacturing the dielectric sheets may be used, or a different paste may be used. The level difference reduction paste includes a larger amount of Sn added compared to the ceramic paste used when manufacturing the dielectric sheets. The large amount of Sn added to the level difference reduction paste causes diffusion of Sn into the dielectric sheets. The addition of Sn can be performed by adding Sn powder to the paste when creating the level difference reduction paste. The addition of Sn powder can also be performed by increasing the amount of Sn added during raw material preparation. It can also be performed by, for example, further printing Sn paste on the level difference reduction paste after printing the level difference reduction paste on the dielectric sheet.

(4) Press the multilayer sheet in the lamination direction to manufacture a multilayer block. The pressing is performed by means such as a hydrostatic press.

(5) Cut the multilayer block to a predetermined size. Multilayer chips are cut out by this cutting. The corner portions and ridge portions of each of the multilayer chips may be rounded. Barrel polishing can be used for the method for rounding.

(6) Fire the multilayer chips. Multilayer bodies are manufactured by this firing. The preferred firing temperature is 900°C or higher and 1200°C or lower. The firing temperature can be changed according to the materials of the dielectric and the internal electrode layer.

Next, external electrodes are provided on the multilayer body.
(7) Apply electrically conductive paste to function as base electrodes to both end surfaces of the multilayer body to form base electrode layers. In the present embodiment, fired layers are formed as the base electrode layers. When forming fired layers, the electrically conductive paste is applied to predetermined positions of the multilayer body. The electrically conductive paste includes a glass component and metal. The application can be performed by a method such as dipping. After application, firing treatment is performed to form the base electrode layers. The temperature of the firing treatment at this time is preferably 700°C or higher and 900°C or lower.

(8) Form the electrically conductive resin layer on the base electrode layer. As a method of forming the electrically conductive resin layer, first, an electrically conductive resin paste containing a resin component and a metal component is prepared. The electrically conductive resin paste is applied to the base electrode layer. This coating can be performed by a dipping method. After the coating, heat treatment is performed at a temperature of 200°C or more to 550°C or less. This heat treatment thermally cures the resin. Thus, the electrically conductive electrode layer is formed. The atmosphere during the heat treatment is preferably a nitrogen gas atmosphere. Further, in order to prevent scattering of the resin and oxidation of various metal components, the oxygen concentration is preferably suppressed to 100 ppm or less.

(9) After forming the electrically conductive resin layer, Ni plated layers are formed as the first lower plated layer and the second lower plated layer on the surface of the electrically conductive resin layer. An electrolytic plating method can be used as a method for forming the first Ni plated layer and the second Ni plated layer. Barrel plating is preferably used as the plating method.

(10) In the present embodiment, Sn plated layers are further formed on the Ni plated layers. That is, the first Sn plated layer is formed on the first Ni plated layer, and the second Sn plated layer is formed on the second Ni plated layer. This makes it possible to improve the wettability of solder used for mounting when mounting the multilayer ceramic capacitor 1 on a substrate or the like. This allows the multilayer ceramic capacitor 1 to be easily mounted on a substrate or the like. An electrolytic plating method can be used as a method for forming the Sn plated layers. Barrel plating is preferably used as the plating method.

As described above, in the present embodiment, by using a material with a large amount of Sn added to the level difference reduction paste, the concentration of additives at the end portions of the inner layer portion 10 is made higher than the concentration of additives at the middle portion of the inner layer portion 10.

### (Modified Example)

However, the method for making the concentration of additives at the end portions of the inner layer portion 10 higher than the concentration of additives at the middle portion of the inner layer portion 10 is not limited to the method using the level difference reduction paste. Even when the level difference reduction paste is not used, it is possible to make the concentration of additives at the end portions of the inner layer portion 10 higher than the concentration of additives at the middle portion of the inner layer portion 10. The case where the level difference reduction paste is not used corresponds to the case where the second dielectric layer 5b is not provided.

When the second dielectric layer 5b is not provided, for example, a method of applying additives or materials containing additives to the region where level difference reduction paste is printed on the dielectric sheet can be used. By applying additives or materials containing additives to the peripheral region of the pattern for manufacturing internal electrode layers on the dielectric sheet, it is possible to make the concentration of additives at the end portions of the inner layer portion 10 higher than the concentration of additives at the middle portion of the inner layer portion 10.

The present invention is not limited to the case where the second dielectric layer 5b is provided in both the vicinity of the end surfaces and the vicinity of the lateral surfaces. The second dielectric layer 5b can also be provided in either the vicinity of the end surfaces or the vicinity of the lateral surfaces. In this case, for the portion where the second dielectric layer 5b is not provided, additives or materials containing additives are applied to the corresponding portion of the dielectric sheet. This makes it possible to make the concentration of additives at the end portions of the inner layer portion 10 higher than the concentration of additives at the middle portion of the inner layer portion 10.

### (Second Embodiment)

A second embodiment of the multilayer ceramic capacitor 1 will be described. In the following description, portions different from the first embodiment will be mainly described. The multilayer ceramic capacitor 1 of the second embodiment differs from the multilayer ceramic capacitor 1 of the first embodiment in that the lateral surface-side outer layer portions are formed by dielectric sheets for manufacturing lateral surface-side outer layer portions. In order to distinguish from the lateral surface-side outer layer portion according to the first embodiment, the first lateral surface-side outer layer portion WG1 is defined as a first lateral surface-side outer layer portion 30a, and the second lateral surface-side outer layer portion WG2 is defined as a second lateral surface-side outer layer portion 30b.

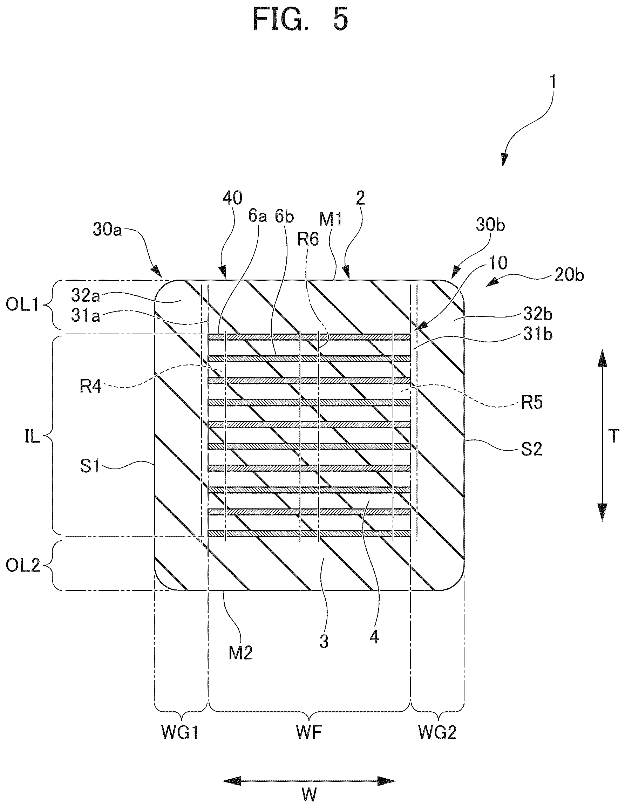

FIG. 5 is a diagram corresponding to the cross-sectional view taken along the line II-II of FIG. 1 in the second embodiment. As shown in FIG. 5, the multilayer body 2 includes a multilayer body core portion 40, the first lateral surface-side outer layer portion 30a, and the second lateral surface-side outer layer portion 30b. The multilayer body core portion 40 is a portion corresponding to the W counter portion WF in the multilayer body 2. In the width direction W, the first lateral surface-side outer layer portion 30a and the second lateral surface-side outer layer portion 30b are provided so as to sandwich the multilayer body core portion 40.

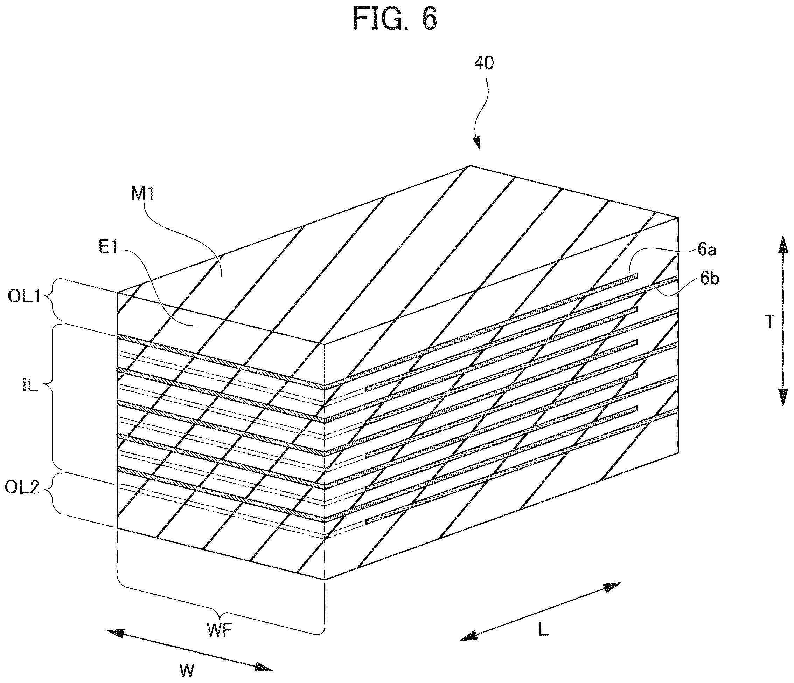

FIG. 6 is a diagram showing an overview of the multilayer body core portion 40. The first internal electrode layers 6a and the second internal electrode layers 6b are exposed from the two end surfaces of the multilayer body core portion 40 in the width direction W.

The first lateral surface-side outer layer portion 30a and the second lateral surface-side outer layer portion 30b each include a plurality of dielectric layers for manufacturing lateral surface-side outer layer portions. Specifically, as shown in FIG. 5, the first lateral surface-side outer layer portion 30a includes a first outer layer 32a located adjacent to the first lateral surface S1 and a first inner layer 31a located adjacent to the multilayer body core portion 40. The second lateral surface-side outer layer portion 30b includes a second outer layer 32b located adjacent to the second lateral surface S2 and a second inner layer 31b located adjacent to the multilayer body core portion 40.

Due to the difference in sinterability between the first outer layer 32a and the first inner layer 31a, it may be possible to confirm the two-layer configuration and the interface between layers by observation using an optical microscope in dark field. Due to the difference in sinterability between the second outer layer 32b and the second inner layer 31b, it may be possible to confirm the two-layer configuration and the interface between layers by observation using an optical microscope in dark field.

However, the two-layer configuration and the interface between layers may not be confirmed even by observation using an optical microscope in dark field. In such a case, the outer 80% region of the first lateral surface-side outer layer portion 30a is defined as the first outer layer 32a, and the portion other than the first outer layer 32a is defined as the first inner layer 31a. The outer 80% region of the second lateral surface-side outer layer portion 30b is defined as the second outer layer 32b, and the portion other than the second outer layer 32b is defined as the second inner layer 31b.

The lateral surface-side outer layer portions can be made of a dielectric material having a perovskite structure made of main components such as BaTiO₃. The Si mol number/Ti mol number in the lateral surface-side outer layer portions is preferably 1.0 or more and 7.0 or less.

The dimension of the lateral surface-side outer layer portions along the width direction W is preferably 5 µm or more and 40 µm or less.

The inner layers of the lateral surface-side outer layer portions contain additives at a higher concentration than the outer layers. The Si content of the outer layers of the lateral surface-side outer layer portions is preferably higher than the Si content of the inner layers. The Sn content of the outer layers of the lateral surface-side outer layer portions is preferably lower than the Sn content of the inner layers.

In the present embodiment, the variation in the positions of the end portions of the internal electrode layers adjacent to the first lateral surface S1 and the second lateral surface S2 in the inner layer portion 10 is small. For example, regarding the positions in the width direction W of the end portions of the first internal electrode layer 6a and the second internal electrode layer 6b adjacent to the first lateral surface S1, the difference between the position closest to the first lateral surface S1 and the end portion position of the internal electrode layer farthest from the first lateral surface S1 is 5 µm or less. Similarly, the difference between the distance closest to the second lateral surface S2 and the distance farthest from the second lateral surface S2 is 5 µm or less.

### (Manufacturing Method of Multilayer Ceramic Capacitor of Second Embodiment)

Regarding the manufacturing method of the multilayer ceramic capacitor 1 of the second embodiment, differences from the manufacturing method of the first embodiment will mainly be described.

Similar methods can be used for Steps (1) to (4) in the manufacturing method of the first embodiment. (5) When cutting the multilayer block, cut so that the electrically conductive paste corresponding to the internal electrode layers is exposed on both sides in the width direction W. Before lamination, the electrically conductive paste for manufacturing internal electrode layers is printed on the dielectric sheet in a pattern that enables such cutting.

(6) Manufacture dielectric sheets for manufacturing lateral surface-side outer layer portions. Specifically, a perovskite compound containing Ba and Ti as a dielectric material is prepared. At least one of Si, Mg, Ni, and Ba is added as an additive to the dielectric powder obtained from this dielectric material. Furthermore, Sn is added as an additive. A binder resin, organic solvent, plasticizer, and dispersant are mixed with the dielectric powder in predetermined proportions. This produces a ceramic slurry.

For the solvent included in the ceramic slurry that functions as the inner layer of the lateral surface-side outer layer portions, an optimal solvent is appropriately selected in order to prevent dissolution of the dielectric sheet for manufacturing the outer layer. This dielectric sheet for manufacturing the inner layer has a role for bonding with the multilayer chip.

The Sn content of the additives contained in the inner layer is preferably higher than the Sn content contained in the outer layer.

(7) Apply the prepared ceramic slurry that functions as the outer layer to the surface of the resin film and dry it. This produces a dielectric sheet for manufacturing the outer layer.

(8) Apply the prepared ceramic slurry to function as the inner layer to the surface of the dielectric sheet for manufacturing the outer layer and dry it. This forms a dielectric sheet for manufacturing the inner layer portion. In this way, a dielectric sheet for manufacturing lateral surface-side outer layer portions having a two-layer configuration is obtained.

(9) A method for obtaining the dielectric sheet for manufacturing lateral surface-side outer layer portions with a two-layer configuration by applying the dielectric sheet for manufacturing the inner layer portion to the surface of the dielectric sheet for manufacturing the outer layer and drying it has been described. However, it is also possible to form it by methods other than the above formation method. For example, the dielectric sheet for manufacturing the outer layer and the dielectric sheet for manufacturing the inner layer portion are each formed in advance. Thereafter, a dielectric sheet for manufacturing the lateral surface-side outer layer portion having a two-layer configuration may be obtained by bonding each of them together. The dielectric sheet for manufacturing the lateral surface-side outer layer portion is not limited to two layers, and may include three or more layers.

(10) Next, peel the dielectric sheet for manufacturing the lateral surface-side outer layer portion from a resin film such as a PET film. Thereafter, the dielectric sheet for manufacturing the inner layer portion in the peeled dielectric sheet for manufacturing the lateral surface-side outer layer portion is pressed against the multilayer chip. At this time, the dielectric sheet is pressed against one side of the multilayer chip in the width direction W. Then, by punching, a layer that functions as the lateral surface-side outer layer portion is provided. Next, for the other side of the multilayer chip where the layer that functions as the lateral surface-side outer layer portion is not provided, the dielectric sheet for manufacturing the inner layer portion is similarly made to oppose and pressed. Then, by punching, a layer that functions as the lateral surface-side outer layer portion is provided. At this time, it is preferred to apply an organic solvent that functions as an adhesive to the lateral surfaces of the multilayer chip in advance.

(11) The multilayer chip on which the layers that function as the lateral surface-side outer layer portions are provided is subjected to degreasing treatment under predetermined conditions in a nitrogen atmosphere. Thereafter, the multilayer chip is fired at a predetermined temperature in a nitrogen-hydrogen-water vapor mixed atmosphere to obtain a sintered multilayer body.

(12) External electrodes are provided on each of the two end surfaces of the sintered multilayer body. In this manner, the multilayer ceramic capacitor 1 is manufactured.

In the second embodiment, the second dielectric layer 5b for reducing level differences can be provided in the vicinity of the end surfaces of the multilayer body, similarly to the first embodiment. In addition, similarly to the first embodiment, the material constituting the second dielectric layer 5b can include a large amount of additives.

Alternatively, in the second embodiment, the second dielectric layer 5b may not be provided in the vicinity of the end surfaces of the multilayer body. In this case, similarly to the first embodiment, a method of applying additives or materials containing additives to regions where the level difference reduction paste is printed on the dielectric sheets can be used.

In the second embodiment as well, similarly to the first embodiment, the concentration of additives at the end portions of the inner layer portion 10 can be made higher than the concentration of additives at the center portion of the inner layer portion 10. This is because the additives contained in the lateral surface-side outer layer portions, particularly the additives contained in the first inner layer 31a and the second inner layer 31b, diffuse into the dielectric layers of the inner layer portion 10.

### (Measurement Method)

A method of measuring the concentration of additives will be described.

### (WT Cross Section)

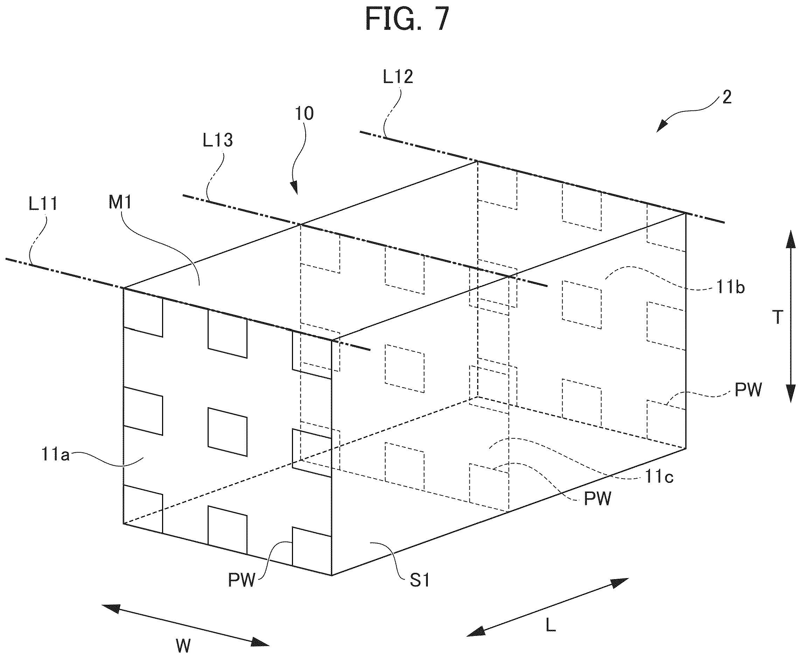

Based on FIG. 7, measurement on the WT cross section will be described. FIG. 7 is a perspective view showing the polished inner layer portion 10. First, polishing of the inner layer portion 10 will be described. Polishing of the multilayer body 2 is performed from the first end surface E1, and polishing is performed to a position 60 µm away from the end portion in the length direction L of the inner layer portion 10. This position is indicated by line L11. The WT cross section at the line L11 is defined as the first cross section 11a.

Similarly, polishing of the multilayer body 2 is performed from the second end surface E2, and polishing is performed to a position 60 µm away from the end portion in the length direction L of the inner layer portion 10. This position is indicated by line L12. The WT cross section at the line L12 is defined as the second cross section 11b.

The measurement sites in the width direction W are 30 µm in one direction and 30 µm in the other direction from the center position in the width direction W of the inner layer portion 10, that is, a width of 60 µm in the width direction W centered on the center position, and a width of 60 µm from each end portion in the width direction W of the inner layer portion 10. The width of 60 µm in the width direction W centered on the center position in the width direction W of the inner layer portion 10 is defined as the middle portion in the width direction W.

The measurement sites in the lamination direction T are 30 µm in one direction and 30 µm in the other direction from the center position in the lamination direction T of the inner layer portion 10, that is, a width of 60 µm in the lamination direction T centered on the center position, and a width of 60 µm from each end portion in the lamination direction T of the inner layer portion 10. The width of 60 µm in the lamination direction T centered on the center position in the lamination direction T of the inner layer portion 10 is defined as the middle portion in the lamination direction T.

The inner layer portion 10 is further polished from the first cross section 11a or the second cross section 11b. Polishing is performed to a position 1/2 the length in the length direction L of the inner layer portion 10. This position is indicated by line L13. The WT cross section at the line L13 is defined as the third cross section 11c.

In the third cross section 11c as well, the same sites as the first cross section 11a and the second cross section 11b are defined as measurement sites.

The measurement sites determined as described above are indicated as measurement sites PW. The measurement sites PW are provided with nine sites each in the first cross section 11a, the second cross section 11b, and the third cross section 11c, for a total of 27 sites.

The size of the range measured at each measurement site is 60 µm in both the width direction W and the lamination direction T. That is, the length of one side of the square frame shown in each measurement site PW is 60 µm.

### (LT Cross Section)

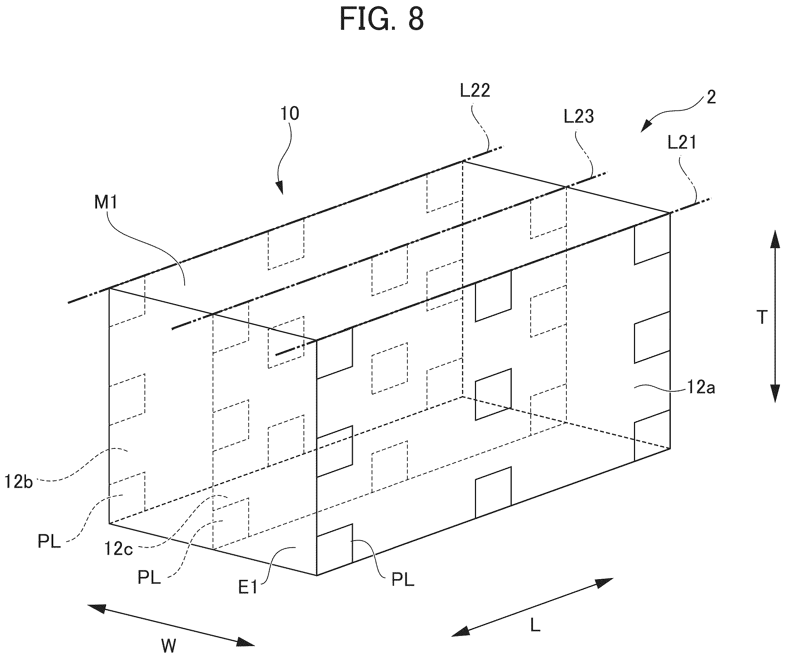

The measurement on the LT cross section will be described with reference to FIG. 8. FIG. 8 is a perspective view showing the polished inner layer portion 10. For the LT cross section, the measurement sites are determined in the same manner as the WT cross section described above.

The multilayer body 2 is polished from the first lateral surface S1, and polishing is performed to a position 60 µm away from the end portion in the width direction W of the inner layer portion 10. This position is indicated by line L21. The LT cross section at the line L21 is defined as a fourth cross section 12a.

Likewise, the multilayer body 2 is polished from the second lateral surface S2, and polishing is performed to a position 60 µm away from the end portion in the width direction W of the inner layer portion 10. This position is indicated by line L22. The LT cross section at the line L22 is defined as a fifth cross section 12b.

The measurement sites in the length direction L are a width of 60 µm at the middle portion in the length direction L of the inner layer portion 10, and a width of 60 µm from each end portion in the length direction L of the inner layer portion 10.

The measurement sites in the lamination direction T are a width of 60 µm at the middle portion in the lamination direction T of the inner layer portion 10, and a width of 60 µm from the end portion in the lamination direction T of the inner layer portion 10.

The inner layer portion 10 is further polished from the fourth cross section 12a or the fifth cross section 12b. Polishing is performed to a position 1/2 the length in the width direction W of the inner layer portion 10. This position is indicated by line L23. The LT cross section at the line L23 is defined as a sixth cross section 12c.

In the sixth cross section 12c as well, measurement sites are provided at the same positions as in the fourth cross section 12a and the fifth cross section 12b.

The measurement sites determined as described above are indicated by measurement sites PL. A total of twenty-seven measurement sites PL are set, with nine sites respectively in the fourth cross section 12a, the fifth cross section 12b, and the sixth cross section 12c.

The size of the range measured at each measurement site indicated by the measurement site PL is the same as the measurement site PW. Specifically, the measured range is 60 µm in both the length direction L and the lamination direction T. That is, the length of one side of the square frame shown in each measurement site PL is 60 µm.

The WT cross section and the LT cross section have been described above. However, measurement can be performed in the same manner for the LW cross section.

The measurement can be performed, for example, by measuring the WT cross section as described above for fifteen multilayer bodies 2 in one lot manufactured under the same conditions, and measuring the LT cross section as described above for fifteen multilayer bodies 2 in one lot manufactured under the same conditions.

When the concentration of the additive was measured at the measurement sites as described above, it was confirmed that the concentration of the additive at the end portions of the inner layer portion 10 was higher than the concentration of the additive at the middle portion of the inner layer portion 10, as described above.

In the multilayer ceramic capacitor 1 of the present embodiment, the concentration of the additive at the end surface side and lateral surface side of the inner layer portion 10 is higher than the concentration of the additive at the middle portion of the inner layer portion 10. Therefore, it is possible to further reduce or prevent the occurrence of insulation deterioration and dielectric breakdown at the end portions of the inner layer portion 10 where electric field tends to concentrate.

Although embodiments of the present invention have been described above, the present invention is not limited thereto, and various changes and modifications are possible.
<1> A multilayer ceramic electronic component which includes: a multilayer body including a plurality of dielectric layers that are laminated, a plurality of first internal electrode layers and a plurality of second internal electrode layers laminated on the plurality of dielectric layers, a first main surface and a second main surface opposed to each other in a lamination direction, a first end surface and a second end surface opposed to each other in a length direction orthogonal to the lamination direction, and a first lateral surface and a second lateral surface opposed to each other in a width direction orthogonal to the lamination direction and the length direction, a first external electrode provided on the first end surface; and a second external electrode provided on the second end surface. The plurality of first internal electrode layers are electrically connected to the first external electrode. The plurality of second internal electrode layers are electrically connected to the second external electrode. The multilayer body includes an inner layer portion where the plurality of first internal electrode layers and the plurality of second internal electrode layers are opposed to each other. A concentration of an additive contained adjacent to the first lateral surface of the inner layer portion is higher than a concentration of the additive in a middle portion of the inner layer portion in the width direction. A concentration of the additive contained adjacent to the second lateral surface of the inner layer portion is higher than a concentration of the additive in the middle portion of the inner layer portion in the width direction. A concentration of the additive at an end portion of each of the plurality of second internal electrode layers adjacent to the first end surface of the inner layer portion is higher than a concentration of the additive in a middle portion of the inner layer portion. A concentration of the additive at an end portion of each of the plurality of first internal electrode layers adjacent to the second end surface of the inner layer portion is higher than a concentration of the additive in a middle portion of the inner layer portion. The additive contains at least one of Sn, Mn, or Mg.
<2> In the multilayer ceramic electronic component as described in <1> above, the concentration of the additive contained adjacent to the first lateral surface of the inner layer portion is 100.1 mol% or more and 103.0 mol% or less of the concentration of the additive in the middle portion of the inner layer portion in the width direction, the concentration of the additive contained adjacent to the second lateral surface of the inner layer portion is 100.1 mol% or more and 103.0 mol% or less of the concentration of the additive in the middle portion of the inner layer portion in the width direction, the concentration of the additive at the end portion of each of the plurality of second internal electrode layers adjacent to the first end surface of the inner layer portion is 100.1 mol% or more and 103.0 mol% or less of the concentration of the additive in a middle portion of the inner layer portion in the length direction, and the concentration of the additive at the end portion of each of the plurality of first internal electrode layers adjacent to the second end surface of the inner layer portion is 100.1 mol% or more and 103.0 mol% or less of the concentration of the additive in the middle portion of the inner layer portion in the length direction.
<3> In the multilayer ceramic electronic component as described in <1> or <2> above, a range where the concentration of the additive is highest is in a range of 0 µm or more and 60 µm or less from an end portion adjacent to the first lateral surface of the inner layer portion toward the middle portion in the width direction, and a range where the concentration of the additive is highest is in a range of 0 µm or more and 60 µm or less from an end portion adjacent to the second lateral surface of the inner layer portion toward the middle portion in the width direction.
<4> In the multilayer ceramic electronic component as described in any one of <1> to <3> above, a range where the concentration of the additive is highest is in a range of 0 µm or more and 60 µm or less from each of the end portions of the plurality of second internal electrode layers adjacent to the first end surface of the inner layer portion toward the middle portion in the length direction, and a range where the concentration of the additive is highest is in a range of 0 µm or more and 60 µm or less from each of the end portions of the plurality of first internal electrode layers adjacent to the second end surface of the inner layer portion toward the middle portion in the length direction.
<5> In the multilayer ceramic electronic component as described in <1> above, the multilayer body includes outer layer portions each made of a dielectric material, and the outer layer portions include: a first main surface-side outer layer portion located adjacent to the first main surface and positioned between the first main surface and an outermost surface of the inner layer portion adjacent to the first main surface in the lamination direction; a second main surface-side outer layer portion located adjacent to the second main surface and positioned between the second main surface and an outermost surface of the inner layer portion adjacent to the second main surface in the lamination direction; a first end surface-side outer layer portion located adjacent to the first end surface and positioned between an outermost surface adjacent to the first end surface and an end portion outermost surface of each of the plurality of second internal electrode layers respectively not connected to the first external electrode; a second end surface-side outer layer portion located adjacent to the second end surface and positioned between an outermost surface adjacent to the second end surface and an end portion outermost surface of each of the plurality of first internal electrode layers respectively not connected to the second external electrode; and lateral surface-side outer layer portions each provided in a portion of the first end surface-side outer layer portion, a portion of the second end surface-side outer layer portion, a portion of the first main surface-side outer layer portion, and a portion of the second main surface-side outer layer portion.
<6> In the multilayer ceramic electronic component as described in <5> above, the lateral surface-side outer layer portions each include an outer layer located near the first lateral surface or the second lateral surface, and an inner layer located inward from the outer layer in the width direction, a Si content in the outer layer is greater than a Si content in the inner layer, and a Sn content in the outer layer is less than a Sn content in the inner layer.
<7> In the multilayer ceramic electronic component as described in <5> or <6>, Si mol number/Ti mol number in each of the lateral surface-side outer layer portions is 1.0 or more and 7.0 or less.
<8> In the multilayer ceramic electronic component as described in any one of <5> to <7>, a dimension of each of the lateral surface-side outer layer portions along the width direction is 5 µm or more and 40 µm or less.
<9> In the multilayer ceramic electronic component as described in any one of <1> to <8>, the plurality of dielectric layers includes first dielectric layers and second dielectric layers, each of the first dielectric layers is provided between a corresponding one of the plurality of first internal electrode layers and a corresponding one of the plurality of second internal electrode layers, each of the second dielectric layers includes a region where the plurality of first internal electrode layers and the plurality of second internal electrode layers are not opposed to each other among the first dielectric layers with the plurality of first internal electrode layers and the plurality of second internal electrode layers opposed to each other with a corresponding one of the plurality of first dielectric layers interposed therebetween, and a portion of each of the second dielectric layers overlaps with the plurality of first dielectric layers in the lamination direction, and each of the second dielectric layers is provided in at least a portion of a first lateral surface-side outer layer portion, a second lateral surface-side outer layer portion, a first end surface-side outer layer portion, and a second end surface-side outer layer portion.

### EXPLANATION OF REFERENCE NUMERALS

1 multilayer ceramic capacitor (multilayer ceramic electronic component)
2 multilayer body
3 outer dielectric layer
4 inner dielectric layer
10 inner layer portion
40 multilayer body core portion
IL inner layer range
OL1 first main surface-side outer layer portion
OL2 second main surface-side outer layer portion
LF L counter portion
LG1 first end surface-side outer layer portion
LG2 second end surface-side outer layer portion
WF W counter portion
WG1 (30a) first lateral surface-side outer layer portion
WG2 (30b) second lateral surface-side outer layer portion

## Claims

1. A multilayer ceramic electronic component comprising:
a multilayer body including a plurality of dielectric layers that are laminated, a plurality of first internal electrode layers and a plurality of second internal electrode layers laminated on the plurality of dielectric layers, a first main surface and a second main surface opposed to each other in a lamination direction, a first end surface and a second end surface opposed to each other in a length direction orthogonal to the lamination direction, and a first lateral surface and a second lateral surface opposed to each other in a width direction orthogonal to the lamination direction and the length direction,
a first external electrode provided on the first end surface; and
a second external electrode provided on the second end surface, wherein
the plurality of first internal electrode layers are electrically connected to the first external electrode,
the plurality of second internal electrode layers are electrically connected to the second external electrode,
the multilayer body includes an inner layer portion where the plurality of first internal electrode layers and the plurality of second internal electrode layers are opposed to each other, a concentration of an additive contained adjacent to the first lateral surface of the inner layer portion is higher than a concentration of the additive in a middle portion of the inner layer portion in the width direction,
a concentration of the additive contained adjacent to the second lateral surface of the inner layer portion is higher than a concentration of the additive in the middle portion of the inner layer portion in the width direction,
a concentration of the additive at an end portion of each of the plurality of second internal electrode layers adjacent to the first end surface of the inner layer portion is higher than a concentration of the additive in a middle portion of the inner layer portion,
a concentration of the additive at an end portion of each of the plurality of first internal electrode layers adjacent to the second end surface of the inner layer portion is higher than a concentration of the additive in a middle portion of the inner layer portion, and
the additive contains at least one of Sn, Mn, or Mg.

2. The multilayer ceramic electronic component according to claim 1, wherein
the concentration of the additive contained adjacent to the first lateral surface of the inner layer portion is 100.1 mol% or more and 103.0 mol% or less of the concentration of the additive in the middle portion of the inner layer portion in the width direction,
the concentration of the additive contained adjacent to the second lateral surface of the inner layer portion is 100.1 mol% or more and 103.0 mol% or less of the concentration of the additive in the middle portion of the inner layer portion in the width direction,
the concentration of the additive at the end portion of each of the plurality of second internal electrode layers adjacent to the first end surface of the inner layer portion is 100.1 mol% or more and 103.0 mol% or less of the concentration of the additive in a middle portion of the inner layer portion in the length direction, and
the concentration of the additive at the end portion of each of the plurality of first internal electrode layers adjacent to the second end surface of the inner layer portion is 100.1 mol% or more and 103.0 mol% or less of the concentration of the additive in the middle portion of the inner layer portion in the length direction.

3. The multilayer ceramic electronic component according to claim 1 or 2, wherein
a range where the concentration of the additive is highest is in a range of 0 µm or more and 60 µm or less from an end portion adjacent to the first lateral surface of the inner layer portion toward the middle portion in the width direction, and
a range where the concentration of the additive is highest is in a range of 0 µm or more and 60 µm or less from an end portion adjacent to the second lateral surface of the inner layer portion toward the middle portion in the width direction.

4. The multilayer ceramic electronic component according to any one of claims 1 to 3, wherein
a range where the concentration of the additive is highest is in a range of 0 µm or more and 60 µm or less from each of the end portions of the plurality of second internal electrode layers adjacent to the first end surface of the inner layer portion toward the middle portion in the length direction, and
a range where the concentration of the additive is highest is in a range of 0 µm or more and 60 µm or less from each of the end portions of the plurality of first internal electrode layers adjacent to the second end surface of the inner layer portion toward the middle portion in the length direction.

5. The multilayer ceramic electronic component according to claim 1, wherein the multilayer body includes outer layer portions each made of a dielectric material, and
the outer layer portions include:
a first main surface-side outer layer portion located adjacent to the first main surface and positioned between the first main surface and an outermost surface of the inner layer portion adjacent to the first main surface in the lamination direction;
a second main surface-side outer layer portion located adjacent to the second main surface and positioned between the second main surface and an outermost surface of the inner layer portion adjacent to the second main surface in the lamination direction;
a first end surface-side outer layer portion located adjacent to the first end surface and positioned between an outermost surface adjacent to the first end surface and an end portion outermost surface of each of the plurality of second internal electrode layers respectively not connected to the first external electrode;
a second end surface-side outer layer portion located adjacent to the second end surface and positioned between an outermost surface adjacent to the second end surface and an end portion outermost surface of each of the plurality of first internal electrode layers respectively not connected to the second external electrode; and
lateral surface-side outer layer portions each provided in a portion of the first end surface-side outer layer portion, a portion of the second end surface-side outer layer portion, a portion of the first main surface-side outer layer portion, and a portion of the second main surface-side outer layer portion.

6. The multilayer ceramic electronic component according to claim 5, wherein
the lateral surface-side outer layer portions each include an outer layer located near the first lateral surface or the second lateral surface, and an inner layer located inward from the outer layer in the width direction,
a Si content in the outer layer is greater than a Si content in the inner layer, and
a Sn content in the outer layer is less than a Sn content in the inner layer.

7. The multilayer ceramic electronic component according to claim 5 or 6, wherein Si mol number/Ti mol number in each of the lateral surface-side outer layer portions is 1.0 or more and 7.0 or less.

8. The multilayer ceramic electronic component according to any one of claims 5 to 7, wherein a dimension of each of the lateral surface-side outer layer portions along the width direction is 5 µm or more and 40 µm or less.

9. The multilayer ceramic electronic component according to any one of claims 1 to 8, wherein
the plurality of dielectric layers includes first dielectric layers and second dielectric layers,
each of the first dielectric layers is provided between a corresponding one of the plurality of first internal electrode layers and a corresponding one of the plurality of second internal electrode layers,
each of the second dielectric layers includes a region where the plurality of first internal electrode layers and the plurality of second internal electrode layers are not opposed to each other among the first dielectric layers with the plurality of first internal electrode layers and the plurality of second internal electrode layers opposed to each other with a corresponding one of the plurality of first dielectric layers interposed therebetween, and a portion of each of the second dielectric layers overlaps with the plurality of first dielectric layers in the lamination direction, and
each of the second dielectric layers is provided in at least a portion of a first lateral surface-side outer layer portion, a second lateral surface-side outer layer portion, a first end surface-side outer layer portion, and a second end surface-side outer layer portion.
